# EUROPÄISCHE PATENTSCHRIFT

(11) **EP 2 683 617 B1**
(45) Veröffentlichungstag und Bekanntmachung des Hinweises auf die Patenterteilung: **01.10.2014**
(21) Anmeldenummer: 11761027.9
(22) Anmeldetag: 31.08.2011
(51) Int. Cl.: B65D 33/16, B65B 1/02, B65B 7/02, B65B 7/16, B65B 51/04, B65B 51/06, B65B 51/16, B65B 51/20, B65B 55/24, B65B 61/00, B31B 19/60, B31B 19/90, B29C 65/10, B29C 65/50, B29C 65/00

(54) **VERFAHREN UND VORRICHTUNG ZUM VERSCHLIESSEN EINES SACKES**
PROCESS AND DEVICE FOR CLOSING A BAG
PROCÉDÉ ET DISPOSITIF DE FERMETURE D'UN SAC

(30) Priorität: 07.03.2011 AT 1272011 U
(43) Veröffentlichungstag der Anmeldung: 15.01.2014
(73) Patentinhaber: Statec Binder GmbH, 8200 Gleisdorf (AT)
(72) Erfinder: LORGER, Josef, A-8341 Paldau (AT); REPNEGG, Gerold, A-8611 St. Katharein (AT)
(74) Vertreter: KLIMENT & HENHAPEL
(86) Internationale Anmeldenummer: PCT/EP2011/065045
(87) Internationale Veröffentlichungsnummer: WO 2012/119667

(56) Entgegenhaltungen:
- WO-A1-02/38446
- FR-A1- 2 741 599
- GB-A- 937 011
- GB-A- 2 073 130
- GB-A- 2 227 226
- US-A- 3 720 565
- US-A- 4 278 488
- US-A1- 2010 266 223

## Beschreibung

### GEBIET DER ERFINDUNG

Die vorliegende Erfindung bezieht sich auf ein Verfahren zum einseitigen Verschließen eines schlauchförmigen Ausgangematerials aus beschichtetem oder unbeschichtetem Polyolefin-Gewebe, insbesondere Polypropylen- oder HDPE-Gewebe, zur Herstellung eines Offensackes.

Weiters bezieht sich die Erfindung auf ein Verfahren zum Verschließen eines gefüllten, einseitig verschlossenen Offensackes aus beschichtetem oder unbeschichtetem Polyolefin-Gewebe, insbesondere Polypropylen- oder HDPE-Gewebe, mit einem im Wesentlichen schlauchförmigen Grundkörper zur Herstellung eines zweiseitig verschlossenen Sackes.

Die vorliegende Erfindung betrifft außerdem eine Vorrichtung zum einseitigen Verschließen eines schlauchförmigen Ausgangsmaterials aus beschichtetem oder unbeschichtetem Polyolefin-Gewebe, insbesondere Polypropylen- oder HDPE-Gewebe, zur Herstellung eines Offensackes.

Die vorliegende Erfindung betrifft weiters eine Vorrichtung zum Verschließen eines gefüllten, einseitig verschlossenen Offensackes aus beschichtetem oder unbeschichtetem Polyolefin-Gewebe, insbesondere Polypropylen- oder HDPE-Gewebe, mit einem im Wesentlichen schlauchförmigen Grundkörper zur Herstellung eines zweiseitig verschlossenen Sackes.

### STAND DER TECHNIK

In der Verpackungstechnik sind Offensäcke aufgrund der flexiblen Art der Befüllung sehr beliebt, wenn es um das Verpacken von frei fließenden Schüttgütern aller Art (feinkörnig, grobkörnig, Pulver, Granulate, Pellets etc.) geht. Dabei bezeichnet Offensack allgemein und ohne Einschränkung auf ein spezielles Material einen Sack mit einem im Wesentlichen schlauchförmigen Grundkörper, der nur in einem ersten Endbereich verschlossen und in einem zweiten Endbereich offen ist. Der Verschluss von gefüllten Offensäcken aus beschichtetem oder unbeschichtetem Polypropylengewebe, wobei Polypropylen so wie Polyethylen zu den Polyolefinen gehört, erfolgt derzeit hauptsächlich durch Vernähung. Man unterscheidet dabei vor allem eine einfache gerade Vernähung und die Vernähung mit Offensackumfaltung. Darüber hinaus können Dichtkordeln oder Dichtstreifen verwendet werden. Bei den eingesetzten Nähmaschinen unterscheidet man vornehmlich Einnadel- und Doppelnadelmaschinen. Dabei ist die grundsätzlich Arbeitsweise bei allen Systemen gleich, wonach der befüllte Offensack der Nähmaschine über ein Einführsystem, das typischerweise über Ketten oder Riemen arbeitet, und ein darunter liegendes Förderband zugeführt und durch Verkettung von zumindest einem Faden vernäht wird.

Ein Nachteil dieser Verschlussart besteht in der Schwächung bzw. Beschädigung des Offensackmaterials durch Nadelstiche. Eine absolute Dichtheit des Verschlusses kann somit kaum gewährleistet werden, was sich z.B. bei sehr feinkörnigem Füllgut besonders nachteilig auswirkt. Weiters besteht die Gefahr, dass durch Nähfäden, Dichtkordeln oder Dichtstreifen das Füllgut kontaminiert wird. Das Vernähen mit Offensackumfaltung ist außerdem wirtschaftlich nachteilig, da hierzu ein erhöhter Aufwand an Offensackmaterial aufgrund der notwendigen größeren Offensacklängen erforderlich ist. Mögliche Fadenbrüche verursachen zudem relativ lange Produktionsstillstände. Darüber hinaus sind Nähanlagen im Allgemeinen relativ wartungsintensiv und verursachen einen hohen Lärmpegel.

Alternativ zur Vernähung existiert auch die Möglichkeit der Verschweißung des Offensackes. Dabei wird üblicherweise der offene Endbereich des befüllten Offensackes zwischen Backen gepresst, die mit Heizelementen versehen sind, wodurch ein thermischer Energieeintrag - durch das gesamte Offensackmaterial hindurch - erfolgt, der die Verschweißung zur Folge hat.

Die Anwendung dieser Methode ist bei Verschmutzung des zu verschweißenden Bereiches durch Füllgut problematisch. Insbesondere bei pulverförmigem Füllgut ist dies oft der Fall, wodurch eine sichere, dichte Verschließung vereitelt wird. Vor allem aber wird durch die geschilderte Art der Verschweißung das Polypropylensackgewebe geschwächt bzw. beschädigt, wie dies auch gemäß der in der GB 937011 A offenbarten Methode zwangsläufig der Fall ist. Hierbei erfolgt das Verschließen von Plastiksäcken, indem ein thermisch verschweißbaren Band über das offene Ende des Sacks gestülpt und gegen das offene Ende gepresst wird, worauf in einer Heißsiegelmaschine die Verschweißung erfolgt, wobei das Band von außen von gegenüberliegenden Seiten mit thermischer Energie beaufschlagt wird. Ganz analog wird gemäß der US 4278488 A der untere Seitenrand eines schlauchförmigen Ausgangsmaterials mit einem thermoplastischem Band verschlossen, wobei auch in diesem Fall der thermische Energieeintrag von außen durch das gesamte Material hindurch erfolgt.

Auch bei der Herstellung von Offensäcken werden die oben geschilderten Verfahren - mit den damit verbundenen Nachteilen - verwendet, wobei ein im Wesentlichen schlauchförmiges Ausgangsmaterial in einem Endbereich verschlossen wird.

In diesem Zusammenhang ist die AT 400831 B zu erwähnen, die ein Verfahren zur Herstellung eines Sackes mit einem kasten- bzw. quaderförmigen Ende offenbart, bei dem ein flaches Deckblatt auf eine gefaltete, flache Bodenfläche eines Sackes aus einem zumindest einseitig beschichteten Gewebe aus monoaxial verstreckten Polymerbändchen geschweißt wird. Dabei besteht das Deckblatt ebenfalls aus einem beschichteten Bändchengewebe. Die Heißluft bewirkt ein Erwärmen der einander zugewandten Beschichtungen bis zu deren Plastifizierung. Danach werden das flache Deckblatt und die flache Sackbodenfläche durch ein gekühltes Walzenpaar gezogen, wodurch die erwärmten Beschichtungen miteinander verpresst werden.

### AUFGABE DER ERFINDUNG

Es ist daher die Aufgabe der vorliegenden Erfindung, einen einseitigen Verschluss eines schlauchförmigen Ausgangsmaterials aus beschichtetem oder unbeschichtetem Polyolefin-Gewebe zur Herstellung eines Offensackes sowie einen Verschluss für Offensäcke aus beschichtetem oder unbeschichtetem Polyolefin-Gewebe zu gewährleisten, ohne dass die oben genannten Nachteile auftreten, insbesondere ohne dass das Ausgangs- bzw. Offensackmaterial beschädigt oder geschwächt wird.

### DARSTELLUNG DER ERFINDUNG

Erfindungsgemäß wird dies dadurch erreicht, dass ein schlauchförmiges Ausgangsmaterial aus beschichtetem oder unbeschichtetem Polyolefin-Gewebe, insbesondere aus Polypropylen- oder HDPE-Gewebe ("high density polyethylene", d.h. Polyethylen mit hoher Dichte), oder ein gefüllter Offensack aus beschichtetem oder unbeschichtetem Polyolefin-Gewebe, insbesondere Polypropylen- oder HDPE-Gewebe, an einem offenen Endbereich mit einem beschichteten Materialband thermisch verschweißt wird. Dadurch wird ein dichter Verschluss gewährleistet und mögliche Kontamination durch Fadenmaterial, Dichtkordeln oder Dichtstreifen vermieden. Wirtschaftlich vorteilhaft ist außerdem, dass gegenüber des Verschlusses durch Vernähung mit Umfaltung des offenen Endbereiches eine Offensack- bzw. Sackmaterialeinsparung erreicht wird.

Um eine optimale thermische Verschweißung zu erreichen, ist eine thermisch aktivierbare Siegelschicht vorteilhaft. Diese kann beispielsweise durch eine Beschichtung des Materialbandes zur Verfügung gestellt werden, wobei die Beschichtung auf unterschiedlichsten Trägermaterialen vorhanden sein kann.

Für die thermische Verschweißung eignen sich als Siegelschicht thermoplastische Kunststoffe wie Polyolefine. Diese sind leicht verarbeitbar und chemisch beständig. Polyethylen ist ein solcher Kunststoff.

Erfindungsgemäß wird ein Verschlussverfahren verwendet, das eine Schädigung bzw. Schwächung des Polypropylen- bzw. HDPE-Gewebes vermeidet, indem die für die thermische Verschweißung notwendige Energie zwischen die zu verschweißenden Schichten und somit direkt auf die zu verschweißenden Flächen aufgebracht wird. Konkret ist es bei einem Verfahren zum einseitigen Verschließen eines schlauchförmigen Ausgangsmaterials zur Herstellung eines Offensackes oder zum Verschließen eines gefüllten einseitig verschlossenen Offensackes mit einem schlauchförmigen Grundkörper zur Herstellung eines zweiseitig verschlossenen Sackes, wobei ein streifenförmiges, beschichtetes oder unbeschichtetes Materialband im Querschnitt V- oder U-förmig gefaltet und über einen offenen ersten Endbereich des schlauchförmigen Ausgangsmaterials oder Grundkörpers gezogen wird, wobei insbesondere die dem Ausgangsmaterial oder Grundkörper zugewandte Seite des Materialbandes mit einer Beschichtung versehen sein kann und durch das Überziehen ein Überlappungsbereich entsteht, in welchem das V- oder U-förmige Materialband den ersten Endbereich des schlauchförmigen Ausgangsmaterials oder Grundkörpers zwischen sich aufnimmt, erfindungsgemäß vorgesehen, dass das schlauchförmige Ausgangsmaterial oder der Grundkörper aus beschichtetem oder unbeschichtetem Polyolefin-Gewebe, insbesondere Polypropylen- oder HDPE-Gewebe, besteht und dass thermische Energie, vorzugsweise in Form eines heißen Gases, besonders bevorzugt in Form von Heißluft, direkt in den Überlappungsbereich hinein, auf die dem Ausgangsmaterial oder Grundkörper zugewandte Seite des Materialbandes und/oder auf die dieser Seite des Materialbandes zugewandte Oberfläche des Ausgangsmaterials oder Grundkörpers eingebracht, vorzugsweise eingeblasen wird und im Anschluss daran Materialband sowie Ausgangsmaterial oder Grundkörper im Überlappungsbereich zusammengepresst werden, wobei die Einbringung der thermischen Energie zeitgleich mit dem Überziehen des Materialbandes über den offenen ersten Endbereich des schlauchförmigen Ausgangsmaterials oder Grundkörpers geschieht.

Gemäß einer weiteren Ausführungsvariante ist vorgesehen, dass das Ausgangsmaterial oder der Grundkörper während des Verschließens kontinuierlich weiterbewegt wird und das Materialband mit regelbarer, vorzugsweise synchroner Geschwindigkeit in Bezug auf das Ausgangsmaterial oder den Grundkörper über den offenen ersten Endbereich des Ausgangsmaterials oder Grundkörpers gezogen wird.

Gemäß einer weiteren Ausführungsvariante wird das Ausgangsmaterial oder der Grundkörper vor dem Überziehen des Materialbandes über dessen ersten Endbereich auf eine definierte Länge beschnitten, wobei vorzugsweise die anfallenden Abschnittstreifen in einen Auffangbehälter befördert werden.

Einer weiteren Ausführungsvariante gemäß ist vorgesehen, dass das Ausgangsmaterial oder der Grundkörper nach dem Beschneiden aber vor dem Einbringen der thermischen Energie mittels Druckluft im offenen ersten Endbereich gereinigt wird. Auf diese Weise soll sichergestellt werden, dass die Verschweißung nicht durch Verunreinigungen, wie z.B. Schüttgut, insbesondere pulverförmiges Schüttgut oder durch das Beschneiden verursachte Rückstände an Ausgangsmaterial oder Grundkörpermaterial, der zu verschweißenden Flächen beeinträchtigt wird.

Um die erfindungsgemäße, dichtende und Material schonende Verschweißmethode durchzuführen, wird eine Vorrichtung vorgeschlagen, die sich gegenüber bekannten Nähanlagen durch Wartungsarmut und einen geringen Lärmpegel auszeichnet. Für den erfindungsgemäßen Verschlussprozess ist es bei einer Vorrichtung zum einseitigen Verschließen eines schlauchförmigen Ausgangsmaterials aus beschichtetem oder unbeschichtetem Polyolefin-Gewebe, insbesondere Polypropylen- oder HDPE-Gewebe, zur Herstellung eines Offensackes oder zum Verschließen eines gefüllten einseitig verschlossenen Offensackes aus beschichtetem oder unbeschichtetem Polyolefin-Gewebe, insbesondere Polypropylen- oder HDPE-Gewebe, mit einem schlauchförmigem Grundkörper zur Herstellung eines zweiseitig verschlossenen Sackes, wobei die Vorrichtung ein Materialbandabrollsystem für ein streifenförmiges Materialband umfasst sowie Mittel zur im Querschnitt V- oder U-förmigen Faltung und Überziehung des Materialbandes über einen offenen ersten Endbereich des Ausgangsmaterials oder Grundkörpers, erfindungsgemäß vorgesehen, dass die Vorrichtung Mittel umfasst, um zeitgleich mit der Überziehung des Materialbandes thermische Energie direkt in einen Überlappungsbereich, in welchem das V- oder U-förmige Materialband den ersten Endbereich des schlauchförmigen Ausgangsmaterials oder Grundkörpers zwischen sich aufnimmt, hinein, auf die dem Ausgangsmaterial oder Grundkörper zugewandte Seite des Materialbandes und/oder auf die dieser Seite des Materialbandes zugewandte Oberfläche des Ausgangsmaterials oder Grundkörpers einzubringen, sowie Andrückmittel zum Andrücken des Materialbandes an die Ausgangsmaterialoberfläche oder Grundkörperoberfläche.

Mit obiger Vorrichtung soll ein kontinuierliches Verschließen von schlauchförmigen Ausgangsmaterialien bzw. von gefüllten, einseitig verschlossenen Offensäcken gewährleistet werden. Dies wird erreicht, indem die Ausgangsmaterialien bzw. die Offensäcke kontinuierlich durch die Vorrichtung befördert werden. Daher ist es gemäß einer Ausführungsvariante vorgesehen, dass die Vorrichtung Fördermittel zur Beförderung des Ausgangsmaterials oder Grundkörpers mit konstanter Geschwindigkeit umfasst und das Materialbandabrollsystem zu dieser Geschwindigkeit synchron regelbar ist, wobei die Fördermittel vorzugsweise ein Riemensystem beinhalten, welches das Ausgangsmaterial oder den Grundkörper an einem offenen ersten Endbereich fixiert und zu den Mitteln zur Faltung und Überziehung des Materialbandes und von diesen wieder weg führt.

Gemäß einer weiteren Ausführungsvariante umfassen die Fördermittel weiters ein Förderbandsystem, mittels dessen das vorzugsweise liegende Ausgangsmaterial oder der vorzugsweise stehende Grundkörper befördert wird.

Das kontinuierliche Bewegen der Ausgangsmaterialen bzw. der Offensäcke durch die Vorrichtung bedeutet, dass das Materialband auf sich bewegende Ausgangsmaterialien bzw.

Offensäcke aufgebracht werden muss, was besondere Maßnahmen notwendig macht. Deshalb sieht eine weitere Ausführungsvariante vor, dass die Mittel zur Faltung und Überziehung des Materialbandes über den offenen ersten Endbereich des Ausgangsmaterials oder Grundkörpers eine Formschulter umfassen, die einen Spalt aufweist, durch den der offene erste Endbereich in einer Förderrichtung durchführbar ist. Die Formschulter ermöglicht das Falten und Überziehen des Materialbandes.

Die Tatsache, dass das Ausgangsmaterial bzw. der Offensack durch die Vorrichtung und damit auch durch die Formschulter kontinuierlich bewegt wird, macht es notwendig, dass die Einbringung der thermischen Energie zielgenau und zur richtigen Zeit erfolgt. Es wird also nur dann thermische Energie in einen Überlappungsbereich eingebracht, wenn dieser tatsächlich vorhanden ist, d.h. wenn tatsächlich das V- oder U-förmige Materialband den ersten Endbereich des Ausgangsmaterials bzw. des Grundkörpers zwischen sich aufnimmt. Daher umfassen gemäß einer weiteren Ausführungsvariante die Mittel zur Einbringung thermischer Energie zumindest eine beweglich angeordnete Luftdüse, die aus einer Ruheposition in eine Arbeitsposition bewegt werden kann, wobei die zumindest eine Luftdüse in der Arbeitsposition so angeordnet ist, dass parallel zur Förderrichtung des Ausgangsmaterials oder Grundkörpers heiße Gase, vorzugsweise Heißluft, in den Überlappungsbereich hinein, auf die dem Ausgangsmaterial oder Grundkörper zugewandte Seite des Materialbandes und/oder auf die dieser Seite des Materialbandes zugewandte Oberfläche des Ausgangsmaterials oder Grundkörpers einblasbar sind.

Gemäß einer weiteren Ausführungsvariante ist vorgesehen, dass die Bewegung der zumindest einen Luftdüse von der Ruheposition in die Arbeitsposition durch ein Einschwenken in einer vertikalen Ebene erfolgt, die parallel zur Förderrichtung des Ausgangsmaterials oder Grundkörpers liegt.

Für das Verschweißen ist es - neben dem Erhitzen - notwendig, eine innige Verbindung der zu verschweißenden Flächen zu erzeugen, indem diese aneinander gepresst werden. Deshalb umfassen in einer weiteren Ausführungsvariante die Andrückmittel direkt im Anschluss an die Formschulter angebrachte Andruckrollen.

Eine weitere Ausführungsvariante sieht vor, dass die Andruckrollen reibschlüssig mit dem Materialband verbunden sind und das Materialband vom Materialbandabrollsystem abziehen.

Um ein erfolgreiches Verschweißen zu gewährleisten, ist es notwendig, dass sich der erste Endbereich des schlauchförmigen Ausgangsmaterials bzw. Grundkörpers tatsächlich innerhalb des Spaltes der Formschulter befindet und nicht über die Formschulter hinaus ragt, wenn das Materialband über den ersten Endbereich gezogen wird. Daher ist es gemäß einer weiteren Ausführungsvariante vorgesehen, dass die Vorrichtung eine Beschneideeinrichtung umfasst, um das Ausgangsmaterial oder den Grundkörper am ersten Endbereich, über den das Materialband gezogen wird, auf eine definierte, wählbare Länge zu beschneiden.

Schließlich ist bei einer weiteren Ausführungsvariante vorgesehen, dass die Vorrichtung eine Abschneideeinheit umfasst, um das Materialband in Förderrichtung gesehen vor und nach dem ersten Endbereich des Ausgangsmaterials oder Grundkörpers, der mit dem Materialband überzogen ist, abzuschneiden. Das Ausgangsmaterial bzw. der Grundkörper kann somit in weiterer Folge - ohne in oder gegen die Förderrichtung überstehende Reste des Materialbandes im verschlossenen ersten Endbereich - aus der Vorrichtung befördert werden.

### KURZE BESCHREIBUNG DER FIGUREN

Die Erfindung wird nun anhand eines Ausführungsbeispiels für das Verschließen eines gefüllten, einseitig verschlossenen Offensackes aus beschichtetem oder unbeschichtetem Polyolefin-Gewebe, insbesondere Polypropylen- oder HDPE-Gewebe, mit einem im Wesentlichen schlauchförmigen Grundkörper zur Herstellung eines zweiseitig verschlossenen Sackes näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Darstellung der Frontquerschnitts- und Seitenansicht eines erfindungsgemäßen Offensackes, der einen mit einem V-förmig gefalteten, streifenförmigen Materialband verschlossenen Endbereich aufweist
- Fig. 2: eine schematische Darstellung der Frontquerschnitts- und Seitenansicht eines zweiseitig verschlossenen Sackes, dessen Endbereiche erfindungsgemäß mit einem U-förmig gefalteten, streifenförmigen Materialband verschlossen sind
- Fig. 3: eine schematische Frontquerschnittsansicht eines erfindungsgemäß verschlossenen Endbereiches eines unbeschichteten und eines beschichteten Sackes oder Offensackes
- Fig. 4: eine axonometrische Ansicht einer Vorrichtung zum erfindungsgemäßen Verschließen von Offensäcken aus beschichtetem oder unbeschichtetem Polyolefin-Gewebe, insbesondere Polypropylen- oder HDPE-Gewebe, wobei sich ein Offensack in der Vorrichtung befindet und der Verschlussprozess ungefähr zur Hälfte abgeschlossen ist
- Fig. 5: eine vergrößerte Ansicht von Fig. 4, jedoch ohne Trägerkonstruktion und Förderband
- Fig. 6: eine axonometrische Detailansicht des Bereiches A aus Fig. 5
- Fig. 7: eine axonometrische Ansicht der Formschulter
- Fig. 8: eine axonometrische Ansicht der Formschulter mit darüber gezogenem Materialband
- Fig. 9: eine Frontansicht der Formschulter mit darüber gezogenem Materialband und eingeführtem offenen Endbereich des Offensackes
- Fig. 10: einen Schnitt durch die Formschulter entlang des Spaltes, wobei das Materialband übergezogen und ein offener Endbereich des Offensackes eingeführt ist und sich die Luftdüsen in Arbeitsposition befinden
- Fig. 11: eine weitere axonometrische Ansicht der Vorrichtung ohne Trägerkonstruktion und Förderband, wobei der Verschlussprozess abgeschlossen ist und sich der nun zweiseitig verschlossene Sack noch in der Vorrichtung befindet

### WEGE ZUR AUSFÜHRUNG DER ERFINDUNG

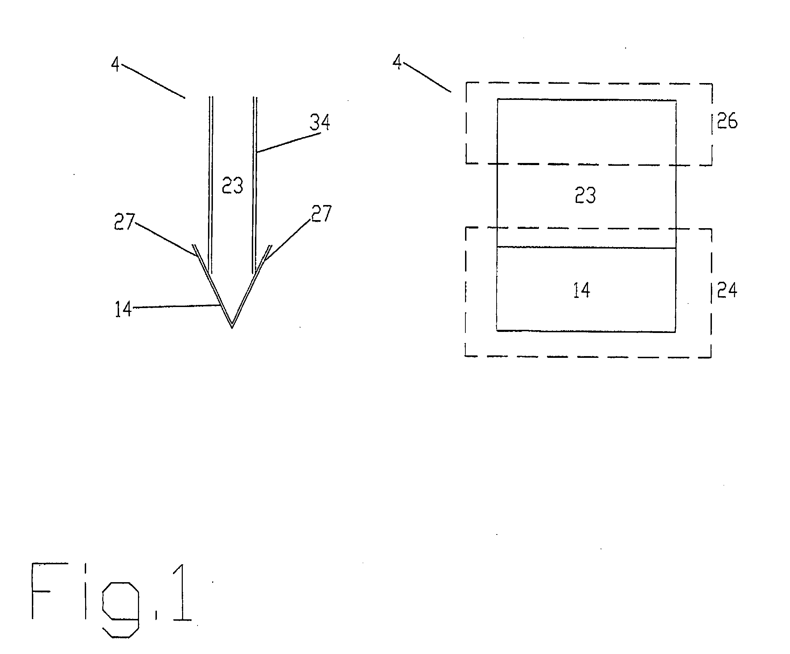

Fig. 1, links zeigt eine schematische, nicht maßstabsgetreue Darstellung der Frontquerschnittsansicht eines erfindungsgemäß mit einem V-förmig gefalteten, streifenförmigen Materialband 14 verschlossenen Endbereiches eines Offensackes 4 mit einer Oberfläche 34. Dabei sind die Schenkel 27 des Materialbandes 14 mit dem schlauchförmigen Grundkörper 23 des Offensackes 4 thermisch verschweißt. Fig. 1, rechts zeigt eine schematische, nicht maßstabsgetreue Seitenansicht, wobei ein verschlossener erster Endbereich 24 und ein offener zweiter Endbereich 26 angedeutet sind.

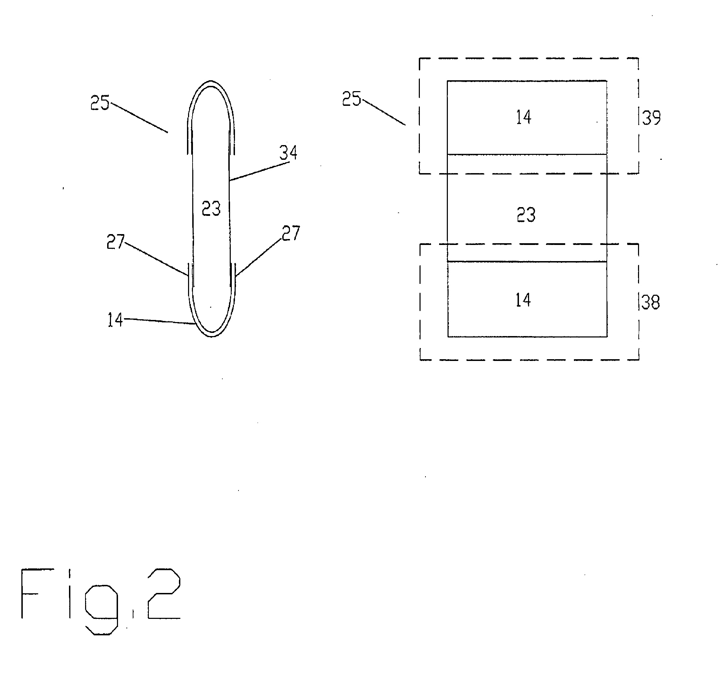

Dem gegenüber stellt Fig. 2, links die schematische, nicht maßstabsgetreue Frontquerschnittsansicht eines zweiseitig verschlossenen Sackes 25 mit einer Oberfläche 34 dar, wobei beide Endbereiche erfindungsgemäß mit einem U-förmig gefalteten, streifenförmigen Materialband 14 verschlossen sind. Dabei sind die Schenkel 27 des Materialbandes 14 mit dem schlauchförmigen Grundkörper 23 des Sackes 25 thermisch verschweißt. Die in Fig. 2, rechts dargestellte schematische, nicht maßstabsgetreue Seitenansicht zeigt nochmals die beiden verschlossenen Endbereiche 38, 39 des zweiseitig verschlossenen Sackes 25.

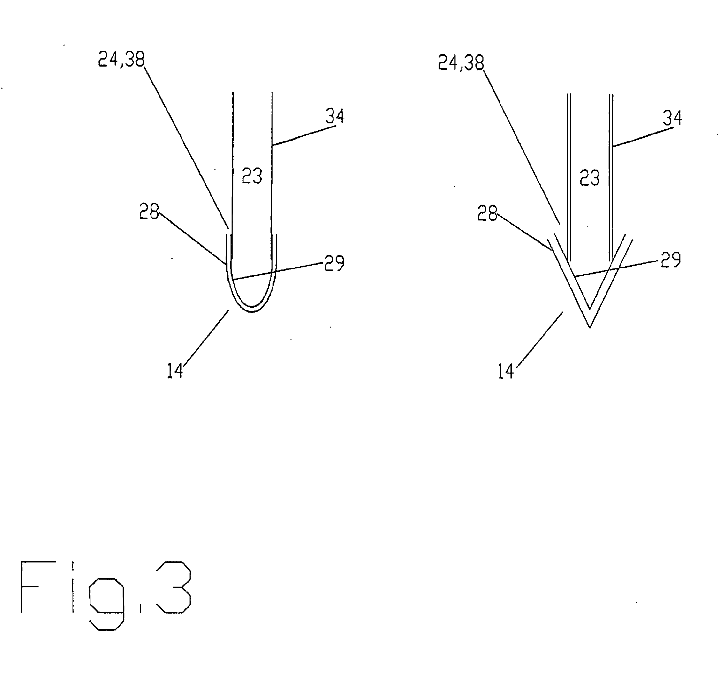

Fig. 3, links zeigt im Detail eine schematische, nicht maßstabsgetreue Frontquerschnittsansicht eines erfindungsgemäß verschlossenen ersten Endbereiches 24, 38 eines unbeschichteten schlauchförmigen Grundkörpers 23. Insbesondere ist das Trägermaterial 28 des U-förmig gefalteten Materialbandes 14 und eine Beschichtung 29 auf der dem Grundkörper 23 zugewandten Seite erkennbar. Fig. 3, rechts zeigt die Situation für einen an der Oberfläche 34 beschichteten, schlauchförmigen Grundkörper 23 und ein V-förmig gefaltetes Materialband 14.

Im Folgenden wird die Erfindung anhand des erfindungsgemäßen Verschlussprozesses eines gefüllten Offensackes 4 zur Herstellung eines zweiseitig verschlossenen Sackes 25 erläutert, wobei der bereits verschlossene zweite Endbereich 39 ebenfalls erfindungsgemäß oder mit einer anderen, bekannten Methode, wie z.B. durch Vernähen, verschlossen ist.

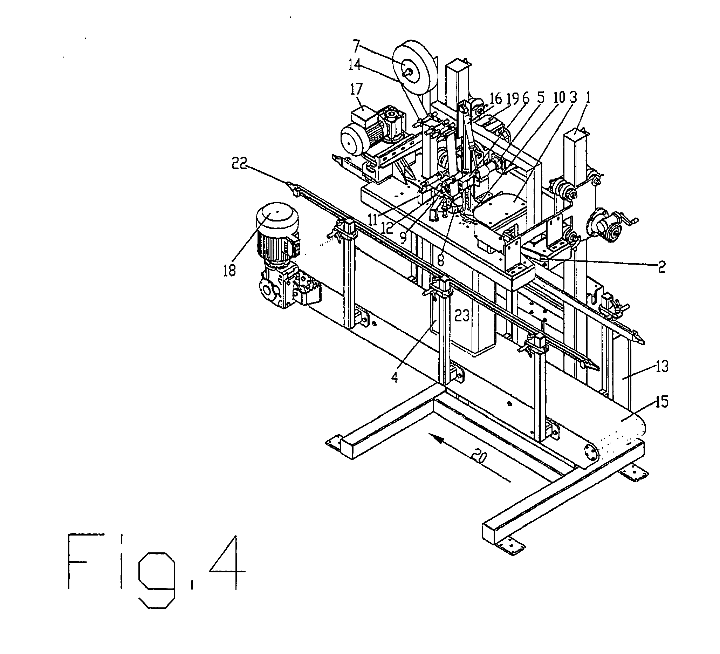

Fig. 4 zeigt eine axonometrische Ansicht einer Vorrichtung zum erfindungsgemäßen Verschließen von Offensäcken aus beschichtetem oder unbeschichtetem Polyolefin-Gewebe, insbesondere Polypropylen- oder HDPE-Gewebe. Ein befüllter Offensack 4 wird mit einem Förderbandsystem stehend und mit der offenen Seite nach oben weisend kontinuierlich durch die Verschlussvorrichtung, deren Komponenten von einem Trägersystem 1 gehalten werden, in einer Förderrichtung 20 weiter befördert. Das Förderbandsystem besteht aus einem Förderband 15, einem Förderbandmotor 18 und einem höhenverstellbaren Schutzgeländer 22. Das Förderband 15 wird dabei von einem über Frequenzumrichter regelbaren Elektromotor 18 angetrieben. Das in der Höhe verstellbare Schutzgeländer 22 verhindert ein Umfallen des gefüllten Offensackes 4 und stellt eine grobe Führung des Offensackes 4 dar.

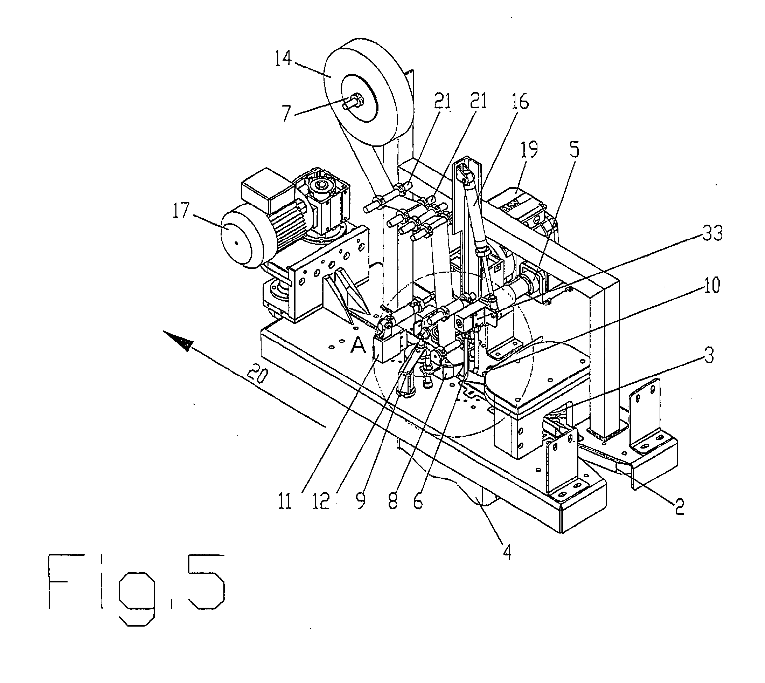

Der offene erste Endbereich 38 wird außerdem über ein elektrisch angetriebenes Riemensystem 2 fixiert und zu jenen Komponenten der Vorrichtung geführt, wo der eigentliche Verschlussprozess stattfindet bzw. wo der offene erste Endbereich 38 auf den Verschluss vorbereitet wird, siehe Fig. 5. Weiters führt das Riemensystem 2 den offenen ersten Endbereich 38 von diesen Komponenten wieder weg. Das Riemensystem 2 wird über einen eigenen Motor 17 angetrieben und kann ebenfalls über Frequenzumrichter geregelt werden. Dabei wird die Riemengeschwindigkeit synchron zur Geschwindigkeit des Förderbandes 15 eingestellt. Der typische Arbeitsbereich der Riemengeschwindigkeit, die gleichzeitig die Durchlaufgeschwindigkeit des Offensackes 4 ist, liegt zwischen 8 und 20 m/min.

Der Offensack 4 wird zunächst durch eine kontinuierlich laufende Beschneideeinrichtung 3 geführt, wo er mittels zweier Scheibenmesser auf eine definierte, wählbare Höhe beschnitten wird. Die dabei anfallenden Abschnittstreifen werden beispielsweise mittels in die Beschneideeinrichtung 3 integrierter Druckluftdüsen und Leitbleche oder Vakuumabsaugung in einen dafür vorgesehenen Auffangbehälter transportiert. Optional wird der später zu verschweißende bzw. zu versiegelnde, offene erste Endbereich 38 anschließend über Düsen gereinigt (nicht dargestellt).

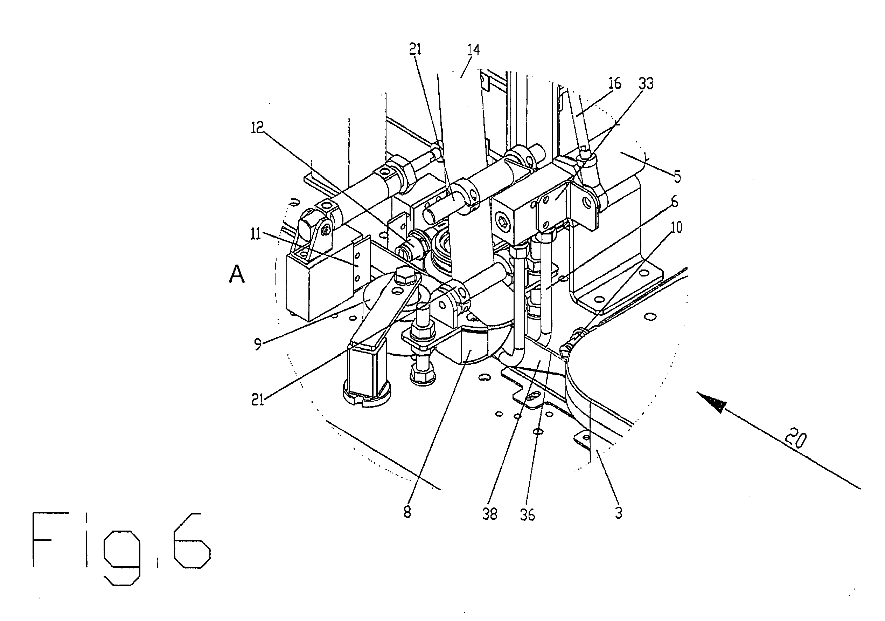

Nach Austritt aus der Beschneideeinrichtung beginnt der eigentliche Verschlussprozess, der über einen Sensor 10 zur Offensackerkennung, siehe Fig. 6, gestartet wird. Hierbei wird ein beschichtetes oder unbeschichtetes Materialband 14, das auch als Reiterband bezeichnet werden kann, verwendet. Im beschriebenen Ausführungsbeispiel wird im Folgenden beispielhaft ein beschichtetes Materialband 14 angenommen, dessen Trägermaterial 28 aus Polypropylengewebe, Karton oder Papier, insbesondere Kraftpapier aufgebaut sein kann. Dabei wird als Kraftpapier ein reißfestes Papier bezeichnet, dessen Zellstofffasern über den sogenannten Kraft-Prozess gewonnen werden.

Das Materialband 14 wird über die Schnittkante 36 des ersten Endbereiches 38 gelegt bzw. gezogen. Hierzu wird das Materialband 14, das von einem Materialbandabrollsystem 7 über stabilisierend wirkende Umlenkrollen 21 abgezogen wird, über eine Formschulter 8 nach unten in Richtung des Offensackes 4 gefaltet, sodass das Materialband 14 den offenen ersten Endbereich 38 von beiden, sich im Wesentlichen parallel zur Förderrichtung 20 des Offensackes 4 erstreckenden Seiten umgibt und eine beschichtete Seite des Materialbandes 14 Richtung Offensackoberfläche 34 weist, siehe Fig. 5 und Fig. 6. Hierbei ist die Beschichtung 29 des Materialbandes 14 auf der Richtung Offensackoberfläche 34 weisenden Seite aus einem Material, das sich zur thermischen Verschweißung mit der Offensackoberfläche eignet, wie beispielsweise Polyethylen. Das Materialband 14 kann auf seiner anderen, äußeren Seite unbeschichtet sein, d.h. die Außenseite des Materialbandes 14 wird durch das Trägermaterial 28 gebildet, wie in Fig. 3 dargestellt. Alternativ dazu kann das Materialband 14 außen die gleiche Beschichtung 29 wie auf der der Offensackoberfläche 34 zugewandten Seite besitzen. Denkbar ist jedoch auch, dass das Materialband 14 auf seiner äußeren Seite eine andere Beschichtung aufweist, um beispielsweise optischen oder anderen Ansprüchen zu genügen.

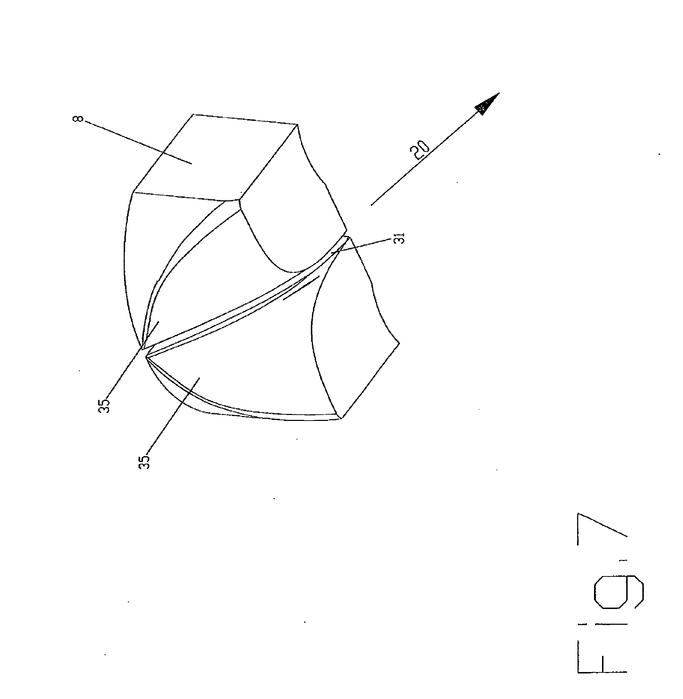

Fig. 7. zeigt die Formschulter 8 im Detail in einer axonometrischen Darstellung von schräg unten. Die Formschulter besteht aus zwei Teilen, die spiegelsymmetrisch bezüglich einer Ebene sind, welche durch die Förderrichtung 20 des Offensackes 4 und die Richtung, in die die offene Seite des Offensackes 4 weist (d.h. vertikal nach oben), aufgespannt wird. Die beiden Teile bilden einen Spalt 31, über den das Materialband 14 gefaltet und durch den der offene erste Endbereich 38 hindurchgefördert wird.

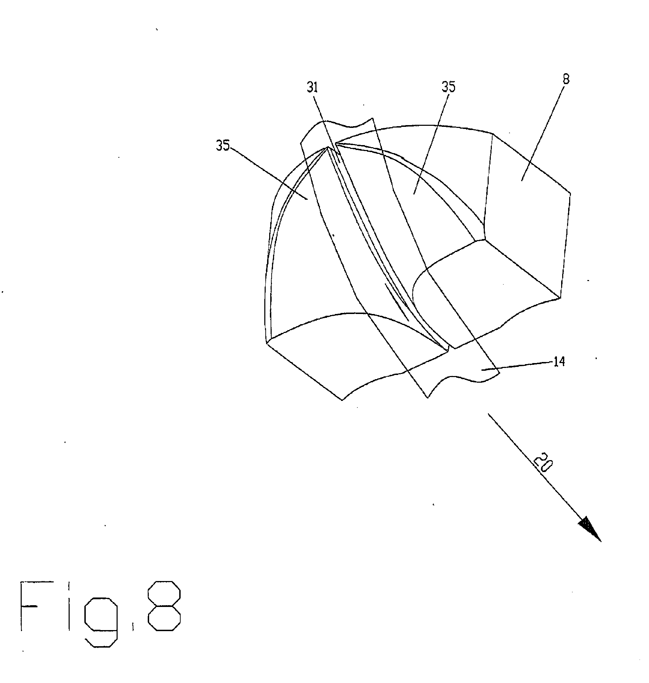

Hierzu illustriert Fig. 8 ebenfalls die Formschulter 8 im Detail, jedoch mit darüber gezogenem Materialband 14. Die Flächen 35, die die Eintrittsöffnung für den Offensack 4 flankieren, sind konvex und von oben nach unten schräg in Förderrichtung 20 ausgeführt. Dies ermöglicht einerseits ein Anschmiegen des Materialbandes 14 an die Formschulter 8, und andererseits ein problemloses Einführen des Offensackes 4 in die Formschulter 8, sodass das Materialband 14 über die Schnittkante 36 des ersten Endbereiches 38 gelegt bzw. gezogen wird.

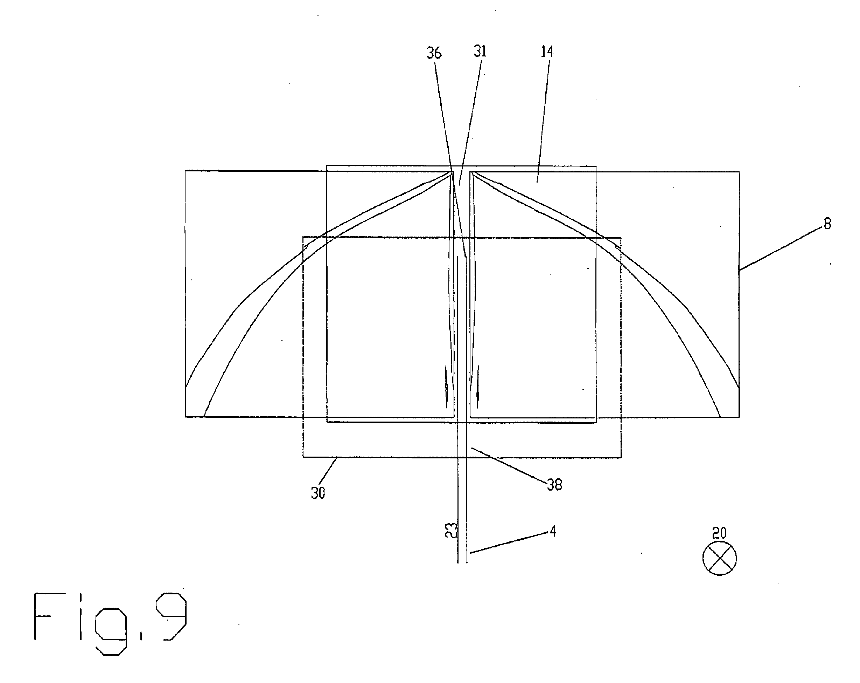

Somit entsteht ein Überlappungsbereich 30, in welchem das Materialband 14 den offenen ersten Endbereich 38 V- oder U-förmig zwischen sich aufnimmt. Dieser Überlappungsbereich 30 ist in Fig. 9 in einer Frontansicht (in Förderrichtung 20 gesehen) der Formschulter 8 mit gefaltetem und übergezogenem Materialband 14 und eingeführtem Offensack 4 gut zu erkennen.

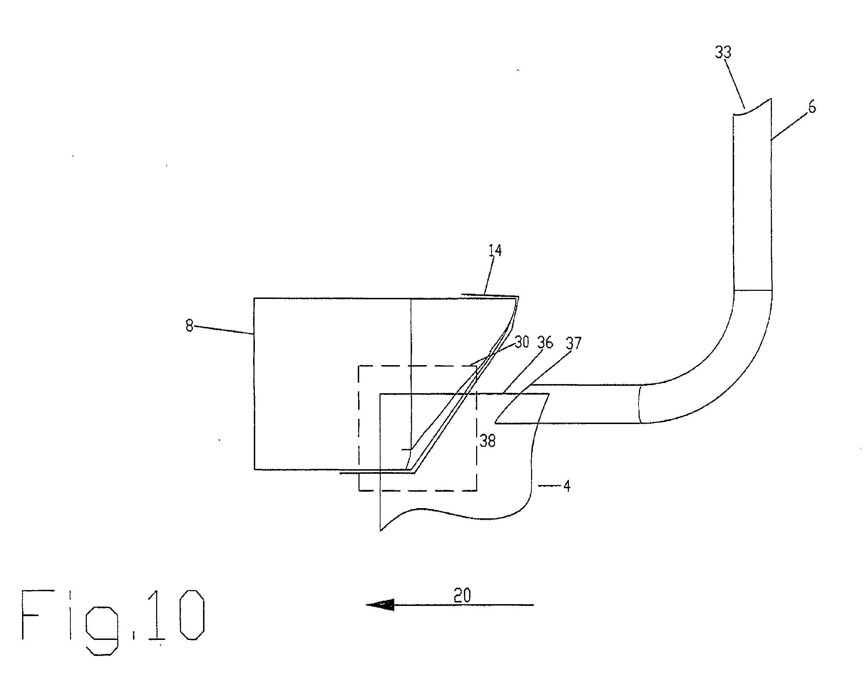

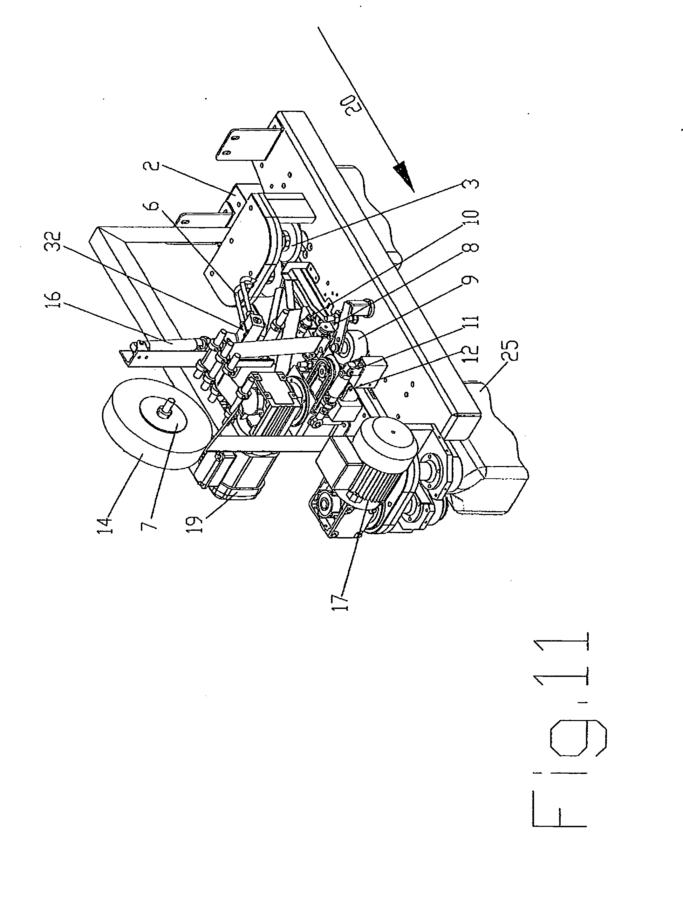

Zeitgleich mit dem Überziehen des Materialbandes 14 über die Formschulter 8 werden Luftdüsen 6 mittels eines Hydraulikstempels 16 aus einer Ruheposition 32 (vergleiche Fig. 11) in eine Arbeitsposition 33 (siehe insbesondere Fig. 10) eingeschwenkt. In dieser Stellung sind die Luftdüsen 6 so angeordnet, dass sie einen definierten, wählbaren Abstand von typischerweise 2 bis 8 mm zur Formschulter 8 haben. Im illustrierten Ausführungsbeispiel sind insgesamt zwei Luftdüsen 6 vorhanden, wobei sich jeweils eine Luftdüse auf den beiden, sich im Wesentlichen parallel zur Förderrichtung 20 des Offensackes 4 erstreckenden Seiten befindet. Die Austrittsöffnungen 37 der Luftdüsen 6 weisen leicht zueinander und im eingeschwenkten Zustand in die Förderrichtung 20 des Offensackes 4, siehe Fig. 6 bzw. Fig. 10. Die Austrittsöffnungen 37 befinden sich jeweils am Ende eines im Wesentlichen rechtwinkeligen Knies, das an jeweils ein, in der Arbeitsposition 33 senkrecht stehendes Rohr anschließt, durch welches Heißluft zugeführt wird. Die Austrittsöffnungen 37 der Luftdüsen 6 sind außerdem angeschrägt, ähnlich zur Kontur der Formschulter 8, siehe Fig. 6, Fig. 10 und Fig. 11, wodurch das Einschwenken begünstigt wird.

Über die Luftdüsen 6 werden heiße Druckluft oder andere geeignete heiße Gase in den Überlappungsbereich 30, in welchem das Materialband 14 den offenen ersten Endbereich 38 V- oder U-förmig zwischen sich aufnimmt, eingeblasen. Hierdurch wird thermische Energie ohne Transfer durch das Trägermaterial 28 des Materialbandes 14 oder durch den Offensack 4 zwischen und somit auf die zu verbindenden Flächen 29, 34 aufgebracht, sodass diese anschmelzen. Je nachdem, ob die zu verbindenden Flächen jeweils beschichtet oder unbeschichtet sind, schmilzt die jeweilige Beschichtung oder das Material des Grundkörpers bzw. das Trägermaterial an. Die Druckluft bzw. geeignete Gase werden dabei über einen regelbaren Lufterhitzer 5 erhitzt. Der Energieeintrag kann hierbei über die Gastemperatur und/oder über den Druck - und damit über die eingeblasene Gasmenge - gezielt verändert werden.

Die angeschmolzenen Flächen 29, 34 des Offensackes 4 und des Materialbandes 14 werden anschließend durch unmittelbar nach der Formschulter 8 angebrachte Andruckrollen 9 aneinander gepresst, wodurch der Versiegelungs- bzw. Verschweißungsvorgang beendet wird. D.h. die Schenkel des Materialbandes 14 sind nun thermisch mit dem Grundkörper des Offensackes 4 verschweißt.

Die Andruckrollen 9 sind reibschlüssig mit dem Materialband 14 verbunden und fungieren gleichzeitig als Abzug des Materialbandes 14 vom Materialbandabrollsystem 7. Die Andruckrollen 9 werden mit einem über Frequenzumrichter regelbaren Elektromotor 19 angetrieben, siehe Fig. 5, und laufen mit synchroner Geschwindigkeit zum Riemensystem 2.

Nach den Andruckrollen 9 ist ein weiterer Sensor 12 angebracht, der die danach platzierte Abschneideeinheit 11 mit zwei Messern startet, siehe Fig. 6. Die Abschneideeinheit 11 schneidet das Materialband 14 zunächst in Förderrichtung 20 gesehen vor dem bereits verschlossenen ersten Endbereich 38 ab, siehe Fig. 6. Dadurch wird ein Überstehen des Materialbandes 14 über die verschlossene Schnittkante 36 des ersten Endbereiches 38 in Förderrichtung minimiert bzw. vermieden. Nachdem das Riemensystem 2 den Offensack 4 durch die Abschneideeinheit 11 hindurch befördert hat, wird das Materialband 14 in Förderrichtung 20 gesehen nach dem verschlossenen ersten Endbereich 38 abgeschnitten, siehe Fig. 11. Somit kann der nun zweiseitig verschlossene Sack 25 ungehindert aus der Verschlussmaschine gefördert werden. Die anfallenden Abschnittstreifen werden beispielsweise mittels Druckluftdüsen und Leitbleche oder Vakuumabsaugung in einen dafür vorgesehenen Auffangbehälter transportiert.

Weiters wird über den Sensor 12 der Materialbandabzug mit den Andruckrollen 9 gestoppt und der Ausschwenkvorgang der Luftdüsen 6 aus der Arbeitsposition 33 (vergleiche Fig. 6) in die Ruheposition 32 (vergleiche Fig. 11) gestartet. Fig. 11 zeigt, dass im Ausführungsbeispiel die Luftdüsen 6 vertikal nach oben ausschwenken, sodass der Schwenkvorgang in einer vertikalen Ebene, die parallel zur Förderrichtung 20 des Offensackes 4 liegt, erfolgt.

Abhängig von der chemischen Zusammensetzung und den thermischen Materialeigenschaften des Offensackes 4 bzw. dessen Oberfläche 34 und des Materialbandes 14 bzw. dessen Beschichtung 29 sind die Geschwindigkeit des Riemensystems 2, die Temperatur und der Druck bzw. die Menge der eingeblasenen heißen Gase sowie die exakte Position der Luftdüsen 6 im eingeschwenkten Zustand zur Formschulter 8 für den Verschlussprozess maßgebend. Außerdem können sich äußere Einflüsse wie Umgebungstemperatur, Luftfeuchtigkeit und Verunreinigungen, insbesondere Staub, auf den Verschweißvorgang auswirken. Über Bedienelemente, die im in Fig. 4 dargestellten Schaltschrank 13 angebracht sind, kann der Verschlussprozess diesbezüglich gesteuert und angepasst werden.

Das Verschließen von einem im Wesentlichen schlauchförmigen Ausgangsmaterial aus beschichtetem oder unbeschichtetem Polyolefin-Gewebe, insbesondere Polypropylen- oder HDPE-Gewebe, zur Herstellung eines Offensackes 4 erfolgt völlig analog und ist nicht extra abgebildet. In diesem Fall tritt im geschilderten Ausführungsbeispiel statt des gefüllten Offensackes 4 ein schlauchförmiges Ausgangsmaterial aus beschichtetem oder unbeschichtetem Polyolefin-Gewebe, insbesondere Polypropylen- oder HDPE-Gewebe, wovon ein offener erster Endbereich 24 mit dem Materialband 14 erfindungsgemäß verschlossen wird. Dabei kann es eventuell günstig sein, das Ausgangsmaterial liegend zu befördern. In diesem Fall müsste die räumliche Anordnung der Vorrichtung angepasst werden. Insbesondere müsste die Positionierung der Beschneideeinrichtung 3, der Luftdüsen 8 in Arbeitsposition 33, der Formschulter 8, der Andruckrollen 9 und der Abschneideeinheit 11 so gewählt sein, dass das liegend beförderte Ausgangsmaterial an einem offenen ersten Endbereich 24 beschnitten, in die Formschulter 8 eingeführt, mit dem Materialband 14 überzogen und verschweißt sowie aus der Vorrichtung wieder heraus befördert werden kann.

In einer weiteren, ebenfalls nicht extra abgebildeten Ausführungsform kann das Materialband 14 zusätzlich noch vernäht werden, um beispielsweise besonderen Beanspruchungen zu genügen.

Ebenso ist es denkbar, mit der dargestellten Erfindung einen bereits verschlossenen Endbereich 24 eines Offensackes 4 oder eines zweiseitig verschlossenen Sackes 25 aus beschichtetem oder unbeschichtetem Polyolefin-Gewebe, insbesondere Polypropylen- oder HDPE-Gewebe, mit einem beschichteten oder unbeschichteten Materialband 14 erfindungsgemäß ein zweites Mal zu verschließen. D.h. das Materialband 14 würde in diesem Fall über einen verschlossenen ersten Endbereich 24, 38 gezogen und mit diesem thermisch verschweißt werden. Beispielsweise könnte somit ein bereits vernähter Endbereich zuverlässig abgedichtet oder ein bereits erfindungsgemäß verschlossener erster Endbereich 24, 38 zusätzlich verstärkt werden.

Es versteht sich, dass bei der Herstellung von Offensäcken 4 aus beschichtetem oder unbeschichtetem Polyolefin-Gewebe, insbesondere Polypropylen- oder HDPE-Gewebe, die erfindungsgemäße einseitige Verschließung auch dann angewandt werden kann, wenn das schlauchförmige Ausgangsmaterial zusätzlich Material für einen Innensack umfasst. Ebenso können gefüllte Offensäcke 4 aus beschichtetem oder unbeschichtetem Polyolefin-Gewebe, insbesondere Polypropylen- oder HDPE-Gewebe, zur Herstellung von zweiseitig verschlossenen Säcken 25 erfindungsgemäß verschlossen werden, wenn der im Wesentlichen schlauchförmige Grundkörper 23 einen Innensack umfasst.

### BEZUGSZEICHENLISTE

- 1: Trägerkonstruktion
- 2: Riemensystem zum Führen und Fixieren des Offensackes
- 3: Beschneideeinrichtung
- 4: gefüllter Offensack aus beschichtetem oder unbeschichtetem Polyolefin-Gewebe, insbesondere Polypropylen- oder HDPE-Gewebe
- 5: Lufterhitzer
- 6: Luftdüsen
- 7: Materialbandabrollsystem
- 8: Formschulter
- 9: Andruckrollen
- 10: Sensor
- 11: Abschneideeinheit
- 12: Sensor
- 13: Schaltschrank mit Bedienelementen
- 14: Materialband
- 15: Förderband
- 16: Hydraulikstempel
- 17: Motor für Riemensystem
- 18: Motor für Förderband
- 19: Motor für Andruckrollen
- 20: Förderrichtung
- 21: Umlenkrolle
- 22: höhenverstellbares Schutzgeländer
- 23: schlauchförmiger Grundkörper
- 24: erster Endbereich des Offensackes
- 25: zweiseitig verschlossener Sack
- 26: zweiter Endbereich des Offensackes
- 27: Schenkel des Materialbandes
- 28: Trägermaterial
- 29: Beschichtung
- 30: Überlappungsbereich
- 31: Spalt
- 32: Ruheposition
- 33: Arbeitsposition
- 34: Oberfläche des Offensackes oder des zweiseitig verschlossenen Sackes
- 35: Flächen der Formschulter
- 36: Schnittkante
- 37: Austrittsöffnungen der Luftdüsen
- 38: erster Endbereich des zweiseitig verschlossenen Sackes
- 39: zweiter Endbereich des zweiseitig verschlossenen Sackes

## Patentansprüche

1. Verfahren zum einseitigen Verschließen eines schlauchförmigen Ausgangsmaterials zur Herstellung eines Offensackes (4) oder zum Verschließen eines gefüllten, einseitig verschlossenen Offensackes (4) mit einem schlauchförmigen Grundkörper (23) zur Herstellung eines zweiseitig verschlossenen Sackes (25), wobei ein streifenförmiges, beschichtetes oder unbeschichtetes Materialband (14) im Querschnitt V- oder U-förmig gefaltet und über einen offenen ersten Endbereich (24, 38) des schlauchförmigen Ausgangsmaterials oder Grundkörpers (23) gezogen wird, wobei insbesondere die dem Ausgangsmaterial oder Grundkörper (23) zugewandte Seite des Materialbandes (14) mit einer Beschichtung (29) versehen sein kann und durch das Überziehen ein Überlappungsbereich (30) entsteht, in welchem das V- oder U-förmige Materialband (14) den ersten Endbereich (24, 38) des schlauchförmigen Ausgangsmaterials oder Grundkörpers (23) zwischen sich aufnimmt, **dadurch gekennzeichnet, dass** das schlauchförmige Ausgangsmaterial oder der Grundkörper (23) aus beschichtetem oder unbeschichtetem Polyolefin-Gewebe, insbesondere Polypropylen- oder HDPE-Gewebe, besteht und dass thermische Energie, vorzugsweise in Form eines heißen Gases, besonders bevorzugt in Form von Heißluft, direkt in den Überlappungsbereich (30) hinein, auf die dem Ausgangsmaterial oder Grundkörper (23) zugewandte Seite des Materialbandes (14) und/oder auf die dieser Seite des Materialbandes (14) zugewandte Oberfläche des Ausgangsmaterials oder Grundkörpers (23) eingebracht, vorzugsweise eingeblasen wird und im Anschluss daran Materialband (14) sowie Ausgangsmaterial oder Grundkörper (23) im Überlappungsbereich (30) zusammengepresst werden, wobei die Einbringung der thermischen Energie zeitgleich mit dem Überziehen des Materialbandes (14) über den offenen ersten Endbereich (24, 38) des schlauchförmigen Ausgangsmaterials oder Grundkörpers (23) geschieht.

2. Verfahren nach Anspruch 1, **dadurch gekennzeichnet, dass** das Ausgangsmaterial oder der Grundkörper (23) während des Verschließens kontinuierlich weiterbewegt wird und das Materialband (14) mit regelbarer, vorzugsweise synchroner Geschwindigkeit in Bezug auf das Ausgangsmaterial oder den Grundkörper (23) über den offenen ersten Endbereich (24, 38) des Ausgangsmaterials oder Grundkörpers (23) gezogen wird.

3. Verfahren nach einem der Ansprüche 1 bis 2, **dadurch gekennzeichnet, dass** das Ausgangsmaterial oder der Grundkörper (23) vor dem Überziehen des Materialbandes (14) über dessen ersten Endbereich (24, 38) auf eine definierte Länge beschnitten wird, wobei vorzugsweise die anfallenden Abschnittstreifen in einen Auffangbehälter befördert werden.

4. Verfahren nach Anspruch 3, **dadurch gekennzeichnet, dass** das Ausgangsmaterial oder der Grundkörper (23) nach dem Beschneiden aber vor dem Einbringen der thermischen Energie mittels Druckluft im offenen ersten Endbereich (24, 38) gereinigt wird.

5. Vorrichtung zum einseitigen Verschließen eines schlauchförmigen Ausgangsmaterials aus beschichtetem oder unbeschichtetem Polyolefin-Gewebe, insbesondere Polypropylen- oder HDPE-Gewebe, zur Herstellung eines Offensackes (4) oder zum Verschließen eines gefüllten, einseitig verschlossenen Offensackes (4) aus beschichtetem oder unbeschichtetem Polyolefin-Gewebe, insbesondere Polypropylen- oder HDPE-Gewebe, mit einem schlauchförmigen Grundkörper (23) zur Herstellung eines zweiseitig verschlossenen Sackes (25), wobei die Vorrichtung ein Materialbandabrollsystem (7) für ein streifenförmiges Materialband (14) umfasst sowie Mittel (8) zur im Querschnitt V- oder U-förmigen Faltung und Überziehung des Materialbandes (14) über einen offenen ersten Endbereich (24, 38) des Ausgangsmaterials oder Grundkörpers (23), **dadurch gekennzeichnet, dass** die Vorrichtung Mittel (6) umfasst, um zeitgleich mit der Überziehung des Materialbandes (14) thermische Energie direkt in einen Überlappungsbereich (30), in welchem das V- oder U-förmige Materialband (14) den ersten Endbereich (24, 38) des schlauchförmigen Ausgangsmaterials oder Grundkörpers (23) zwischen sich aufnimmt, hinein, auf die dem Ausgangsmaterial oder Grundkörper (23) zugewandte Seite des Materialbandes (14) und/oder auf die dieser Seite des Materialbandes (14) zugewandte Oberfläche des Ausgangsmaterials oder Grundkörpers (23) einzubringen, sowie Andrückmittel (9) zum Andrücken des Materialbandes (14) an die Ausgangsmaterialoberfläche oder Grundkörperoberfläche.

6. Vorrichtung nach Anspruch 5, **dadurch gekennzeichnet, dass** die Vorrichtung Fördermittel (2, 15, 17, 18, 22) zur Beförderung des Ausgangsmaterials oder Grundkörpers (23) mit konstanter Geschwindigkeit umfasst und das Materialbandabrollsystem (7) zu dieser Geschwindigkeit synchron regelbar ist, wobei die Fördermittel (2, 15, 17, 18, 22) vorzugsweise ein Riemensystem (2) beinhalten, welches das Ausgangsmaterial oder den Grundkörper (23) an dem offenen ersten Endbereich (24, 38) fixiert und zu den Mitteln (8) zur Faltung und Überziehung des Materialbandes (14) und von diesen wieder weg führt.

7. Vorrichtung nach Anspruch 6, **dadurch gekennzeichnet, dass** die Fördermittel (2, 15, 17, 18, 22) weiters ein Förderbandsystem (15, 18, 22) umfassen, mittels dessen das vorzugsweise liegende Ausgangsmaterial oder der vorzugsweise stehende Grundkörper (23) befördert wird.

8. Vorrichtung nach einem der Ansprüche 5 bis 7, **dadurch gekennzeichnet, dass** die Mittel (8) zur Faltung und Überziehung des Materialbandes (14) über den offenen ersten Endbereich (24, 38) des Ausgangsmaterials oder Grundkörpers (23) eine Formschulter (8) umfassen, die einen Spalt (31) aufweist, durch den der offene erste Endbereich (24, 38) in einer Förderrichtung (20) durchführbar ist.

9. Vorrichtung nach Anspruch 8, **dadurch gekennzeichnet, dass** die Andrückmittel (9) direkt im Anschluss an die Formschulter (8) angebrachte Andruckrollen (9) umfassen.

10. Vorrichtung nach Anspruch 9, **dadurch gekennzeichnet, dass** die Andruckrollen (9) reibschlüssig mit dem Materialband (14) verbunden sind und das Materialband (14) vom Materialbandabrollsystem (7) abziehen.

11. Vorrichtung nach einem der Ansprüche 5 bis 10, **dadurch gekennzeichnet, dass** die Mittel zur Einbringung thermischer Energie zumindest eine beweglich angeordnete Luftdüse (6) umfassen, die aus einer Ruheposition (32) in eine Arbeitsposition (33) bewegt werden kann, wobei die zumindest eine Luftdüse (6) in der Arbeitsposition (33) so angeordnet ist, dass parallel zur Förderrichtung (20) des Ausgangsmaterials oder Grundkörpers (23) heiße Gase, vorzugsweise Heißluft, in den Überlappungsbereich (30) hinein, auf die dem Ausgangsmaterial oder Grundkörper (23) zugewandte Seite des Materialbandes (14) und/oder auf die dieser Seite des Materialbandes (14) zugewandte Oberfläche des Ausgangsmaterials oder Grundkörpers (23) einblasbar sind.

12. Vorrichtung nach Anspruch 11, **dadurch gekennzeichnet, dass** die Bewegung der zumindest einen Luftdüse (6) von der Ruheposition (32) in die Arbeitsposition (33) durch ein Einschwenken in einer vertikalen Ebene erfolgt, die parallel zur Förderrichtung (20) des Ausgangsmaterials oder Grundkörpers (23) liegt.

13. Vorrichtung nach einem der Ansprüche 5 bis 12, **dadurch gekennzeichnet, dass** sie eine Beschneideeinrichtung (3) umfasst, um das Ausgangsmaterial oder den Grundkörper (23) am ersten Endbereich (24, 38), über den das Materialband (14) gezogen wird, auf eine definierte, wählbare Länge zu beschneiden.

14. Vorrichtung nach einem der Ansprüche 5 bis 13, **dadurch gekennzeichnet, dass** die Vorrichtung eine Abschneideeinheit (11) umfasst, um das Materialband (14) in Förderrichtung (20) gesehen vor und nach dem ersten Endbereich (24, 38) des Ausgangsmaterials oder Grundkörpers (23), der mit dem Materialband (14) überzogen ist, abzuschneiden.

## Claims

1. Method for closing a tubular starting material on one side to produce an open bag (4) or for closing a filled open bag (4) closed on one side, comprising a tubular base body (23) to produce a bag (25) closed on two sides, wherein a strip-shaped, coated or uncoated material strip (14) is folded in a V or U shape in cross-section and drawn over an open first end region (24, 38) of the tubular starting material or base body (23), wherein in particular the side of the material strip (14) facing the starting material or base body (23) can be provided with a coating (29) and as a result of the drawing over an overlap region (30) is produced in which the V- or U-shaped material strip (14) receives between itself the first end region (24, 38) of the tubular starting material or base body (23), **characterized in that** the tubular starting material or the base body (23) consists of coated or uncoated polyolefin fabric, in particular polypropylene or HDPE fabric and that thermal energy, preferably in the form of a hot gas, particularly preferably in the form of hot air is introduced, preferably blown, directly into the overlap region (30) on the side of the material strip (14) facing the starting material or base body (23) and/or onto the surface of the starting material or base body (23) facing this side of the material strip (14), and then material strip (14) and starting material or base body (23) are pressed together in the overlap region (30), wherein the introduction of the thermal energy takes place at the same time as the drawing of the material strip (14) over the open first end region (24, 38) of the tubular starting material or base body (23).

2. The method according to claim 1, **characterized in that** the starting material or the base body (23) are continuously moved further during the closing and the material strip (14) is drawn over the open first end region (24, 38) of the starting material or base body (23) at controllable, preferably synchronous speed in relation to the starting material or base body (23).

3. The method according to one of claims 1 to 2, **characterized in that** the starting material or the base body (23) is trimmed to a defined length before drawing the material strip (14) over the first end region (24, 38) thereof, wherein preferably the accumulating section strips are conveyed into a collecting container.

4. The method according to claim 3, **characterized in that** after the trimming but before introducing the thermal energy the starting material or the base body (23) is cleaned by means of compressed air in the open first end region (24, 38).

5. Apparatus for closing on one side a tubular starting material comprising coated or uncoated polyolefin fabric, in particular polypropylene or HDPE fabric, to produce an open bag (4) or for closing a filled open bag (4) closed on one side, comprising coated or uncoated polyolefin fabric, in particular polypropylene or HDPE fabric, comprising a tubular base body (23) to produce a bag (25) closed on two sides, wherein the apparatus comprises a material strip unrolling system (7) for a strip-shaped, material strip (14) and comprises means (8) for folding in a V or U shape in cross-section and drawing the material strip (14) over an open first end region (24, 38) of the tubular starting material or base body (23), **characterized in that** the apparatus comprises means (6) for introducing, at the same time as drawing over the material strip (14), thermal energy directly into an overlap region (30) in which the V- or U-shaped material strip (14) receives the first end region (24, 38) of the tubular starting material or base body (23) between itself, onto the side of the material strip (14) facing the starting material or base body (23) and/or onto the surface of the starting material or base body (23) facing this side of the material strip (14), as well as pressing means (9) for pressing the material strip (14) onto the starting material surface or base body surface.

6. The apparatus according to claim 5, **characterized in that** the apparatus comprises conveying means (2, 15, 17, 18, 22) for conveying the starting material or base body (23) at constant speed and the material strip unrolling system (7) can be controlled synchronously to this speed, wherein the conveying means (2, 15, 17, 18, 22) preferably include a belt system (2) which fixes the starting material or the base body (23) on the open first end region (24, 38) and leads to the means (8) for folding and drawing over the material strip (14) and away from these.

7. The apparatus according to claim 6, **characterized in that** the conveying means (2, 15, 17, 18, 22) further comprises a conveyor belt system (15, 18, 22) by means of which the preferably horizontal starting material or the preferably vertical base body (23) is conveyed.

8. The apparatus according to one of claims 5 to 7, **characterized in that** the means (8) for folding and drawing over the material strip (14) over the first end region (24, 38) of the starting material or base body (23) comprises a forming shoulder (8) which has a gap (31) through which the open first end region (24, 38) can be guided in a conveying direction (20).

9. The apparatus according to claim 8, **characterized in that** the pressing means (9) comprise pressing rollers (9) applied directly after the forming shoulder (8).

10. The apparatus according to claim 9, **characterized in that** the pressing rollers (9) are connected frictionally to the material strip (14) and draw the material strip (14) from the material strip unrolling system (7).

11. The apparatus according to any one of claims 5 to 10, **characterized in that** the means for introducing thermal energy comprise at least one movably disposed air nozzle (6) which can be moved from a rest position (32) into a working position (33), wherein the at least one air nozzle (6) is disposed in the working position (33) such that parallel to the conveying direction (20) of the starting material or base body (23), hot gases, preferably hot air, can be blown into the overlap region (30), onto the side of the material strip (14) facing the starting material or base body (23) and/or onto the surface of the starting material or base body (23) facing this side of the material strip (14).

12. The apparatus according to claim 11, **characterized in that** the movement of the at least one air nozzle (6) from the rest position (32) into the working position (33) is accomplished by a pivoting in a vertical plane which lies parallel to the conveying direction (20) of the starting material or base body (23).

13. The apparatus according to one of claims 5 to 12, **characterized in that** this comprises a trimming device (3) in order to trim the starting material or the base body (23) to a defined, selectable length at the first end region (24, 38) over which the material strip (14) is drawn.

14. The apparatus according to one of claims 5 to 13, **characterized in that** the apparatus comprises a chopping unit (11) in order to cut the material strip (14) in the conveying direction (20) before and after the first end region (24, 38) of the starting material or base body (23) which is drawn over with the material strip (14).

## Revendications

1. Procédé pour fermer sur un côté un matériau de départ en forme de tube pour fabriquer un sac ouvert (4) ou pour fermer un sac ouvert (4) rempli et fermé d'un côté ayant un corps de base (23) en forme de tube pour fabriquer un sac fermé des deux côtés (25), dans lequel un lé de matériau (14) en forme de bande, enduit ou non enduit, est plié en forme de V ou de U en section et tiré par-dessus une première partie d'extrémité ouverte (24, 38) du matériau de départ ou du corps de base (23) en forme de tube, le côté du lé de matériau (14) tourné vers le matériau de départ ou le corps de base (23), en particulier, pouvant être enduit d'un revêtement (29) et cette traction produisant une zone de recouvrement (30) dans laquelle le lé de matériau (14) en forme de V ou de U reçoit entre soi la première partie d'extrémité (24, 38) du matériau de départ ou du corps de base (23) en forme de tube, **caractérisé en ce que** le matériau de départ ou le corps de base (23) en forme de tube est composé de textile de polyoléfine enduit ou non enduit, en particulier de tissu de polypropylène ou de HDPE, et **en ce que** de l'énergie thermique, de préférence sous la forme d'un gaz, en particulier sous la forme d'air chaud, est introduite directement, de préférence soufflée, dans la zone de recouvrement (30), sur le côté du lé de matériau (14) tourné vers le matériau de départ ou le corps de base (23) et/ou sur la surface du matériau de départ ou du corps de base (23) tournée vers ce côté du lé de matériau (14), et le lé de matériau (14) ainsi que le matériau de départ ou le corps de base (23) sont ensuite pressés ensemble dans la zone de recouvrement (30), l'apport de l'énergie thermique ayant lieu en même temps que la traction du lé de matériau (14) par-dessus la première zone d'extrémité (24, 38) ouverte du matériau de départ ou du corps de base (23) en forme de tube.

2. Procédé selon la revendication 1, **caractérisé en ce que** le matériau de départ ou le corps de base (23) est avancé de façon continue pendant la fermeture et le lé de matériau (14) est tiré à une vitesse réglable, de préférence synchrone par rapport au matériau de départ ou au corps de base (23), par-dessus la première zone d'extrémité (24, 38) ouverte du matériau de départ ou du corps de base (23).

3. Procédé selon l'une des revendications 1 à 2, **caractérisé en ce que** le matériau de départ ou le corps de base (23) est découpé, avant que le lé de matériau (14) soit tiré par-dessus sa première zone d'extrémité (24, 38), à une longueur définie, les bandes découpées formées étant de préférence acheminées vers un bac collecteur.

4. Procédé selon la revendication 3, **caractérisé en ce que** le matériau de départ ou le corps de base (23) est nettoyé après la découpe mais avant l'apport de l'énergie thermique au moyen d'air comprimé dans la première zone d'extrémité (24, 38) ouverte.

5. Dispositif pour fermer sur un côté un matériau de départ en forme de tube en tissu de polyoléfine enduit ou non enduit, en particulier en tissu de polypropylène ou de HDPE, pour fabriquer un sac ouvert (4) ou pour fermer un sac ouvert (4) rempli et fermé d'un côté fait d'un tissu de polyoléfine enduit ou non enduit, en particulier d'un tissu de polypropylène ou de HDPE, ayant un corps de base (23) en forme de tube pour fabriquer un sac fermé des deux côtés (25), lequel dispositif comprend un système de dévidage de lé de matériau (7) pour un lé de matériau (14) en forme de bande, ainsi que des moyens (8) pour plier le lé de matériau (14) en forme de V ou de U en section et le tirer par-dessus une première partie d'extrémité (24, 38) ouverte du matériau de départ ou du corps de base (23), **caractérisé en ce que** le dispositif comprend des moyens (6) pour amener de l'énergie thermique, en même temps que le lé de matériau (14) est tiré par-dessus, directement dans une zone de recouvrement (30), dans laquelle le lé de matériau (14) en forme de V ou de U reçoit entre soi la première partie d'extrémité (24, 38) du matériau de départ ou du corps de base (23), sur la face du lé de matériau (14) tournée vers le matériau de départ ou le corps de base (23) et/ou sur la surface du matériau de départ ou du corps de base tournée vers cette face du lé de matériau (14), ainsi que des moyens presseurs (9) pour presser le lé de matériau (14) sur la surface du matériau de départ ou la surface du corps de base.

6. Dispositif selon la revendication 5, **caractérisé en ce que** le dispositif comprend des moyens de transport (2, 15, 17, 18, 22) pour le transport du matériau de départ ou du corps de base (23) à une vitesse constate et le système de dévidage de lé de matériau (7) peut être réglé de façon synchrone à cette vitesse, les moyens de transport (2, 15, 17, 18, 22) comprenant de préférence un système de courroie (2) qui fixe le matériau de départ ou le corps de base (23) sur la première partie d'extrémité (24, 38) ouverte et l'amène vers les moyens (8) pour le pliage et la traction du lé de matériau (14) et l'éloigne de ceux-ci.

7. Dispositif selon la revendication 6, **caractérisé en ce que** les moyens de transport (2, 15, 17, 18, 22) comprennent en outre un système de bande transporteuse (15, 18, 22) au moyen duquel le matériau de départ, de préférence horizontal, ou le corps de base (23), de préférence vertical, est transporté.

8. Dispositif selon l'une des revendications 5 à 7, **caractérisé en ce que** les moyens (8) pour plier le lé de matériau (14) et le tirer par-dessus la première partie d'extrémité (24, 38) ouverte du matériau de départ ou du corps de base (23) comprennent un épaulement de mise en forme (8) qui présente une fente (31) à travers laquelle la première partie d'extrémité (24, 38) ouverte peut être passée dans une direction de transport (20).

9. Dispositif selon la revendication 8, **caractérisé en ce que** les moyens presseurs (9) comprennent des rouleaux presseurs (9) disposés immédiatement après l'épaulement de mise en forme (8).

10. Dispositif selon la revendication 9, **caractérisé en ce que** les rouleaux presseurs (9) sont reliés par friction avec le lé de matériau (14) et retirent le lé de matériau (14) du système de dévidage du lé de matériau (7).

11. Dispositif selon l'une des revendications 5 à 10, **caractérisé en ce que** les moyens pour apporter de l'énergie thermique comprennent au moins une buse d'air (6) disposée de façon mobile, qui peut être déplacée d'une position de repos (32) à une position de travail (33), l'au moins une buse d'air (6) étant disposée, dans la position de travail (33), de telle façon que des gaz chauds, de préférence de l'air chaud, puissent être soufflés parallèlement au sens de transport (20) du matériau de départ ou du corps de base (23) dans la zone de recouvrement (30), sur la surface du lé de matériau (14) tournée vers le matériau de départ ou le corps de base (23) ou sur la surface du matériau de départ ou du corps de base (23) tournée vers cette face du lé de matériau (14).

12. Dispositif selon la revendication 11, **caractérisé en ce que** le mouvement de l'au moins une buse d'air (6) de la position de repos (32) à la position de travail (33) s'effectue par un pivotement dans un plan vertical parallèle au sens de transport (20) du matériau de départ ou du corps de base (23).

13. Dispositif selon l'une des revendications 5 à 12, **caractérisé en ce qu'**il comprend un dispositif de coupe (3) pour couper le matériau de départ ou le corps de base (23) dans la première partie d'extrémité (24, 38), par-dessus laquelle le lé de matériau (14) est tiré, à une longueur définie et sélectionnable.

14. Dispositif selon l'une des revendications 5 à 13, **caractérisé en ce que** le dispositif comprend une unité de coupe (11) pour couper le lé de matériau (14) avant et après, dans le sens de transport (20), la première partie d'extrémité (24, 38) du matériau de départ ou du corps de base (23) avec lequel le lé de matériau (14) est recouvert.
